# FASCICULE DE BREVET EUROPEEN

(11) **EP 1 268 346 B1**
(45) Date de publication et mention de la délivrance du brevet: **01.06.2005**
(21) Numéro de dépôt: 01919562.7
(22) Date de dépôt: 26.03.2001
(51) Int. Cl.: C01G 31/00, H01M 4/48

(54) **OXYDE DE SODIUM ET DE VANADIUM, SON UTILISATION COMME MATIERE ACTIVE D'UNE ELECTRODE POSITIVE**
NATRIUM VANADIUMOXID, SEINE VERWENDUNG ALS AKTIVES MATERIAL FÜR EINE POSITIVE ELEKTRODE
SODIUM AND VANADIUM OXIDE, ITS USE AS ACTIVE MATERIAL FOR A POSITIVE ELECTRODE

(30) Priorité: 04.04.2000 FR 0004296
(43) Date de publication de la demande: 02.01.2003
(73) Titulaire: CENTRE NATIONAL DE LA RECHERCHE SCIENTIFIQUE (CNRS), 75016 Paris (FR)
(72) Inventeur: LEGAGNEUR-VIENNEY, Vanessa, 1033 Chesseaux sur Lausanne (FR); LE GAL LA SALLE, Annie, F-44240 La Chapelle sur Erdre (FR); PIFFARD, Yves, F-44240 La Chapelle sur Erdre (FR); VERBAERE, Alain, F-44240 La Chapelle sur Erdre (FR); GUYOMARD, Dominique, F-44880 Sautron (FR)
(74) Mandataire: Sueur, Yvette
(86) Numéro de dépôt international: PCT/FR2001/000904
(87) Numéro de publication internationale: WO 2001/074716

(56) Documents cités:
- CHEMICAL ABSTRACTS, vol. 109, no. 6, 8 août 1988 (1988-08-08) Columbus, Ohio, US; abstract no. 47339, SUCHA: "thermal properties of sodium hexavanadates" XP002156172 & ACTA FAC. RERUM NAT. UNIV. COMENIANAE, CHIM., vol. 34, 1986 - 1987, pages 87-96,
- CHEMICAL ABSTRACTS, vol. 128, no. 14, 6 avril 1998 (1998-04-06) Columbus, Ohio, US; abstract no. 169724, SPAHR M.: "electrochemistry of chemically lithiated nav3o8" XP002156173 & J.ELECTROCHEM. SOC., vol. 145, no. 2, 1998, pages 421-427,
- NOVAK: "magnesium insertion batteries-an alternative to lithium?" J. POWER SOURCES, vol. 54, no. 2, 1995, pages 479-482, XP004044466

## Description

La présente invention concerne une matière active pour une électrode positive utilisable notamment dans une batterie rechargeable.

Parmi les batteries rechargeables, les batteries au lithium qui ont une électrode négative constituée par du lithium, sous forme de lithium métallique ou sous forme d'alliage de lithium, sont celles qui donnent les plus grandes énergies massiques et volumiques, du fait de la légèreté du lithium et de son caractère fortement électropositif. Dans ces batteries, la cathode est généralement constituée par un matériau composite dont la matière accive est un oxyde.

L'oxyde ω-Li₃₋ₓV₂O₅ est considéré comme référence de matière active d'électrode positive. (Cf. "C. Delmas, et al., J. Power Sources, 34, 1991, 113"). Une telle électrode montre de bonnes performances dans une batterie. L'utilisation de ω-Li₃₋ₓV₂O₅ présente toutefois un inconvénient majeur. En effet, ce composé est obtenu au cours de la première décharge d'une batterie dans laquelle la matière active de cathode est V₂O₅. Lors de cette première décharge, il est nécessaire d'insérer 3Li par V₂O₅ pour former la phase ω-Li₃V₂O₅. Lors de la charge succédant à la première décharge, le matériau conserve irréversiblement de l'ordre de 1 Li. Ce phénomène provoque une perte non négligeable de Li provenant de l'anode de Li, et introduit une perturbation volumétrique dans la batterie. Le volume de l'anode de lithium diminue très sensiblement, alors que celui de la cathode n'évolue que très peu. Ce phénomène est néfaste à la cohésion des électrodes, et donc à la bonne reproductibilité des résultats et à une grande longévité de la batterie qui contient une telle matière active de cathode.

Il est également connu d'utiliser comme matière active d'électrode positive, des oxydes AV₃O₈ dans lesquels A est notamment un métal alcalin et qui cristallisent dans le groupe d'espace P2₁/m. Lorsque A est Li ou Na, la structure de l'oxyde est la structure dite structure de LiV₃O₈, qui est différente de celle de KV₃O₈.

L'utilisation de KV₃O₈ comme matière active de la cathode d'une batterie au lithium est décrite par V. Manev, et al., (J. Power Sources, 43-44, 1993, 561). Cet oxyde fournit une capacité initiale de l'ordre de 50 mAh/g au régime de C/2, qui décroît rapidement en cyclage. La perte de capacité est de 50% en 40 cycles.

L'utilisation de NaV₃O₈ sous forme amorphe comme matière active de la cathode d'une batterie au lithium est décrite par J. Kawakita, et al., (Solid State Ionics, 124, 1999, 29). Ce matériau présente une capacité réversible de l'ordre 110 mAh.g⁻¹ (à 0,1 mA.cm⁻², correspondant à un régime de C/8). Cette capacité diminue très rapidement lorsque le courant de décharge imposé augmente.

L'utilisation de l'oxyde NaV₃O₈ obtenu à basse température (350°C) est décrite par M. Pasquali, et al., (Electrochim. Acta, 36, 1991, 1549), et par J. Kawakita, précité. Elle conduit à une capacité massique réversible de l'ordre de 200 mAh/g (à 0,1 mA.cm⁻², correspondant à un régime de C/15) au premier cycle décharge-charge d'après J. Kawakita, précité. Selon M.E. Spahr, et al., (J. Electrochem. Soc., 145, 1998, 421), un oxyde de ce type, préparé par précipitation et recuit à 300°C, conduit à une capacité massique réversible initiale de 310 mAh/g au régime de C/12 qui chute régulièrement lors du cyclage, avec une perte de capacité de 20% en 50 cycles.

L'utilisation de l'oxyde NaV₃O₈ obtenu à haute température (620-680°C) est décrite notamment par M. Pasquali, et al., précité, par A. Yu, et al., (Electrochem. Soc. Proc. Vol. 97-18, 1997, 215) et par J. Kawakita, et al., (Solid State Ionics, 124, 1999, 21). Elle conduit à une capacité massique réversible de l'ordre de 140-170 mAh/g (à 0,1-0,2 mA.cm⁻², soit au régime de C/10-C/15) au premier cycle décharge-charge. Cette capacité diminue très rapidement quand le courant de décharge devient plus important (90 mAh/g à 0,5 mA.cm⁻², soit au régime de C/3). Les performances en cyclage restent médiocres, du fait que la perte de capacité est de 18% à 25% après 40 cycles.

Il apparaît ainsi que les composés AV₃O₈ (A = Na, K) de l'art antérieur, cristallisant dans le groupe d'espace P21/m, ont des performances médiocres lorsqu'ils sont utilisés comme matière active de la cathode d'une batterie au lithium.

Le but de la présente invention est de fournir une batterie rechargeable qui a une énergie massique et volumique élevée et de bonnes performances en cyclage.

La présente invention a pour objet un nouvel oxyde de sodium et de vanadium, son utilisation comme matière active pour une électrode positive, une électrode positive et son utilisation dans une batterie rechargeable.

L'oxyde selon l'invention répond à la formule H_{y}Na_{1-y}V₃O₈.nH₂O (I) et il est caractérisé en ce que :
- 0 ≤ n ≤ 1,70 et 0 ≤ y ≤ 0,5 (de préférence 0 ≤ y ≤ 0,2) ;
- il cristallise dans le groupe d'espace Pnma ;
- les paramètres de maille après déshydratation par traitement thermique sont comme suit : a = 18, 593 (8) (Å), b = 9, 431 (4) (Å), c = 3, 6081 (7) (Å), V = 632,7(6) (Å³).

Un procédé de préparation de l'oxyde (I) consiste à effectuer une oxydation du précurseur solide V₃O₇.H₂O par voie chimique, ou par voie électrochimique.

Le précurseur V₃O₇.H₂O peut être préparé aisément par une synthèse hydrothermale sous pression autogène, à partir d'une solution aqueuse de VOSO₄, 5H₂O, ou à partir de V₂O₃ dans un mélange eau/acide acétique, ou à partir d'un alcoxyde de vanadium. La synthèse a une durée de quelques jours et elle s'effectue à une température comprise entre 150°C et 250°C. L'hydrate formé V₃O₇.H₂O formé est ensuite séparé par filtration.

L'oxyde H_{y}Na_{1-y}V₃O₈.nH₂O (I) peut ensuite être obtenu par oxydation électrochimique ou par oxydation chimique du précurseur. L'oxydation chimique peut être effectuée par exemple à l'aide d'une solution aqueuse de NaClO à un pH compris entre 4 et 13, à une température comprise entre 5 et ⁻0°C. Le pH est maintenu de préférence entre 5 et 6 de manière à éviter des pertes d'oxyde par dissolution. Il est particulièrement avantageux d'effectuer la réaction à la température ambiante, voisine de 20°C. Ces conditions d'oxydation préservent les liaisons fortes qui existent au sein de l'hydrate précurseur V₃O₇.H₂O. Le produit obtenu après oxydation est récupéré par filtration, lavage et séchage à l'air. Il est préférable d'utiliser l'agent oxydant en excès, de manière à augmenter la vitesse de réaction.

Le précurseur V₃O₇.H₂O peut également être oxydé par voie électrochimique. Une électrode dont la matière active est constituée par cet hydrate est immergée dans une solution de NaClO₄ portée à un potentiel oxydant proche du potentiel d'oxydation de l'eau. La concentration de la solution est comprise entre 0,01 et 1 mol.l⁻¹, de préférence de l'ordre de 0,1 mol.⁻¹. Le potentiel oxydant est compris dans l'intervalle 0,8 à 1 V vs ECS.

L'oxyde selon la présente invention est utile comme matière active d'une électrode positive d'une batterie électrochimique.

Une telle électrode positive, utilisable pour une batterie rechargeable, est une électrode composite comprenant un liant, un composé conférant des propriétés de conduction électronique et une matière active, et elle est caractérisée en ce que la matière active est un oxyde H_{y}Na_{1-y}V₃O₈.nH₂O (I) tel que défini précédemment.

Le liant du matériau composite constituant l'électrode positive de la présente invention est un liant organique non électroactif (électrochimiquement stable). Le liant peut être constitué par un polymère non solvatant et éventuellement au moins un composé polaire aprotique. Le polymère non solvatant peut être choisi parmi les homopolymères et les copolymères de fluorure de vinylidène, les copolymères d'éthylène, de propylène et d'un diène, les homopolymères et les copolymères de tétrafluoroéthylène, les homopolymères et les copolymères de N-vinylpyrrolidone, les homopolymères et les copolymères d'acrylonitrile et les homopolymères et les copolymères de méthacrylonitrile. Le poly(fluorure de vinylidène) est particulièrement préféré. Le polymère non solvatant peut porter des fonctions ioniques. A titre d'exemple d'un tel polymère, on peut citer les sels de colyperfluoroéther sulfonate, dont certains sont commercialisés sous la dénomination Nafion®, et les sels de polystyrène sulfonate. Le composé polaire aprotique peut être choisi parmi les carbonates linéaires ou cycliques, les éthers linéaires ou cycliques, les esters linéaires ou cycliques, les sulfones linéaires ou cycliques, les sulfamides et les nitriles.

Le composé conférant des propriétés de conduction électronique est de préférence un noir de carbone qui ne catalyse pas l'oxydation de l'électrolyte à potentiel élevé. De nombreux noirs de carbone du commerce répondent à cette condition. On peut citer en particulier le composé Ensagri Super P® commercialisé par la société Chemmetals (Baltimore).

Une électrode composite peut être élaborée en mélangeant l'oxyde (I) de la présente invention constituant la matière active et le noir de carbone dans une solution du liant dans un solvant approprié, en épandant le mélange obtenu sur un disque d'aluminium servant de collecteur, puis en évaporant le solvant. Le solvant est choisi en fonction du liant utilisé. A titre d'exemple, la cyclopentanone et la N-méthylpyrrolidone sont des solvants appropriés pour le liant poly(fluorure de vinylidène). Si le solvant est la cyclopentanone, celui-ci est évaporé à température ambiante alors que la N-méthylpyrrolidone est évaporée à chaud sous atmosphère neutre.

Une électrode ainsi constituée peut être utilisée dans une batterie rechargeable au lithium dont le fonctionnement est assuré par la circulation réversible d'ions lithium dans un électrolyte entre une électrode positive et une électrode négative. Un autre objet de la présente invention est une telle batterie, caractérisée en ce qu'elle comprend une électrode positive telle que décrite ci-dessus. Une telle batterie rechargeable au lithium peut être une batterie dont l'anode est constituée par du lithium métallique, désignée ci-après par "batterie au lithium métallique", ou une batterie dite "rocking chair" ou "batterie aux ions lithium" dont l'anode comprend un liant et un matériau capable d'insérer de manière réversible des ions lithium à bas potentiel rédox.

Lors de l'assemblage d'une batterie selon la présente invention, on utilise pour constituer l'électrode positive, un oxyde (I) déshydraté correspondant à la formule H_{y}Na_{1-y}V₃O₈ avec 0,00 ≤ y ≤ 0,5. Cette électrode est montée dans une cellule électrochimique comprenant une seconde électrode capable de libérer des ions Li⁺ à bas potentiel, les deux électrodes étant séparées par un électrolyte. Au cours de la première décharge, des ions Li⁺ sont insérés dans l'oxyde (I) pour donner le composé LiₓH_{y}Na_{1-y}V₃O₈, x atteignant la valeur 3 en fin de décharge Ensuite, la batterie est chargée à potentiel constant, ce qui provoque une désintercalation des ions lithium de l'oxyde. Lorsque la charge complète est atteinte, la valeur de x est nulle. Ensuite, la valeur de x varie entre 0 et 3 lors des cycles successifs décharge / charge.

Dans un mode de réalisation d'une batterie selon la présente invention, l'électrolyte comprend au moins un sel facilement dissociable en solution dans un solvant comprenant au moins un composé polaire aprotique. Parmi les sels utilisés habituellement dans les batteries au lithium métallique ou les batteries aux ions lithium, on peut citer les sels de lithium, par exemple LiClO₄, LiAsF₆, LiPF₆, LiBF₄, LiR_{F}SO₃, LiCH₃SO₃, LiN(R_{F}SO₂)₂, LiC(R_{F}SO₂)₃ et LiCF(R_{F}SO₂)₂, R_{F} représentant un groupe parfluoroalkyle ayant de 1 à 8 atomes de carbone ou un atome de fluor. LiClO₄, LiPF₆ et LiBF₄ sont particulièrement préférés.

Le solvant contenu dans l'électrolyte peut être constitué par un ou plusieurs composés polaires aprotiques choisis parmi les composés polaires aprotiques cités précédemment. Le solvant est constitué de préférence par au moins deux carbonates, l'un étant choisi parmi le carbonate d'éthylène et le carbonate de propylène, l'autre étant choisi parmi le carbonate de diméthyle, le carbonate de diéthyle et le carbonate de méthyle et d'éthyle.

Dans un autre mode de réalisation, l'électrolyte comprend un polymère solvatant et un sel de lithium tel que défini ci-dessus. Un polymère solvatant est un polymère qui comporte des unités solvatantes contenant au moins un hétéroatome choisi parmi le soufre, l'oxygène, l'azote et le fluor. L'électrolyte peut en outre contenir un mélange d'un composé liquide aprotique polaire choisi parmi les composés polaires aprotiques cités ci-dessus et d'un polymère solvatant. Il peut comprendre de 2 à 98% en volume de solvant liquide, suivant que l'on souhaite un électrolyte plastifié avec une faible teneur en composé aprotique polaire, ou un électrolyte gélifié avec une teneur élevée en composé aprotique polaire.

Le solvant de l'électrolyte peut également être constitué par un polymère polaire non solvatant comprenant des unités contenant au moins un hétéroatome choisi parmi le soufre, l'oxygène, l'azote et le fluor, et par au moins un composé polaire aprotique tel que défini précédemment ou au moins un polymère solvatant tel que défini précédemment. La présence d'un sel facilement dissociable est nécessaire lorsque le polymère présent dans l'électrolyte ne comporte pas de substituants ioniques.

Bien entendu, l'électrolyte d'une batterie de la présente invention peut contenir en outre les additifs utilisés de manière classique dans ce type de matériau, et notamment un plastifiant, une charge, d'autres sels, etc.

Lorsque la batterie selon l'invention est une batterie au lithium métallique, elle comprend une électrode négative constituée par du lithium métallique.

Lorsque la batterie selon l'invention est une batterie aux ions lithium, elle comprend une électrode négative composite constituée par un liant et un matériau lithié, capable de désinsérer de manière réversible des ions lithium à bas potentiel rédox. Un tel matériau peut être choisi parmi les matériaux carbonés lithiés, naturels ou de synthèse. Ces matériaux carbonés peuvent être par exemple un coke de pétrole, un graphite, un whisker de graphite, une fibre de carbone, un méso carbone micro grains, (désigné usuellement par meso carbone micro bead), un coke de brai (désigné usuellement par pitch coke), un coke aiguille (désigné usuellement par needle coke. Ces matériaux carbonés peuvent être lithiés par voie électrochimique. Le matériau capable de désinsérer de manière réversible des ions lithium à bas potentiel rédox peut en outre être choisi parmi les oxydes tels que par exemple LiMoO₂, LiWO₂, Li₆Fe₂O₃, Li₇Ti₅O₁₂ et les vanadates amorphes lithiés, ou parmi les sulfures tels que par exemple Li₉MO₆S₆ et LiTiS₂ ou parmi les oxysulfures lithiés. Le matériau capable de désinsérer de manière réversible des ions lithium à bas potentiel rédox peut en outre être un alliage de lithium qui peut être choisi parmi les alliages β-LiAl, γ-LiAl, Li-Pb (par exemple Li₇Pb₂), Li-Sn, Li-Si, Li-Cd-Pb, Li-Sn-Cd, Li-Al-Mn. Ces alliages peuvent faire partie d'une matrice composite complexe non active électrochimiquement. L'électrode négative peut en outre être une électrode composite du type Li/Li₃N ou LiₓPb-polyparaphénylène. Le liant est un liant organique stable électrochimiquement dans le domaine de fonctionnement de l'électrode négative. A titre d'exemple, on peut citer les homopolymères du fluorure de polyvinylidène ou un copolymère éthylène propylène diène. Un poly(fluorure de polyvinylidène) est particulièrement préféré. Une électrode composite négative peut être élaborée en introduisant le composé carboné dans une solution du liant dans un solvant polaire aprotique, en épandant le mélange obtenu sur un disque de cuivre servant de collecteur, puis en évaporant le solvant.

L'utilisation de la matière activé de la présente invention pour élaborer l'électrode positive d'une batterie rechargeable comprenant soit une anode de lithium, soit une anode constituée par un matériau d'insertion du lithium à bas potentiel rédox, procure une batterie ayant une bonne énergie messique et volumique, et présentant de bonnes performances en cyclage.

La présente invention est expliquée plus en détail par les exemples suivants.

### Exemple 1

On a préparé par une oxydation chimique douce, l'oxyde H_{y}Na_{1-y}V₃O₈.nH₂O (I) de la présente invention et, à titre comparatif, les oxydes H_{y}A_{1-y}V₃O₆.nH₂O, A représentant Li et K.

Au cours d'une première étape, on a préparé le précurseur V₃O₇.H₂O par synthèse hydrothermale : on a mélangé dans une bombe Berghof K₂S₂O₈ et une solution de VOSO₄, 5H₂O (0,15 mol.l⁻¹) dans un rapport molaire 1:7,5 et maintenu le mélange réactionnel à 200°C pendant 3,5 jours. Après filtration, on a récupéré un solide vert, fibreux.

On a ensuite préparé le composé H_{0,1}Na_{0,9}V₃O₈.1,7H₂O par oxydation chimique en faisant réagir 80 mg du précurseur V₃O₇.H₂O avec 100 ml d'une solution aqueuse de NaClO à 1 mol.l⁻¹) à un pH de 5,5 à température ambiante. Le pH a été obtenu en acidifiant la solution par HCl. L'état d'avancement de la réaction a été contrôlé par le changement de couleur : la poudre initialement verte devient orange après une heure de réaction. Le produit d'oxydation a été récupéré par filtration, puis rincé à l'eau et séché à l'air.

Au cours d'un autre essai, on a reproduit le mode opératoire ci-dessus, mais en utilisant une quantité de HCl telle que le pH du milieu réactionnel soit 6,5, toutes choses étant égales par ailleurs.

A titre comparatif, on a préparé par un procédé analogue, les oxydes H_{0,4}Li_{0,6}V₃O₈.2,8H₂O et H_{0,4}K_{0,6}V₃O₈.1,0H₂O par oxydation en 15 minutes dans une solution aqueuse de 100 ml de LiClO et de KClO respectivement.

### Exemple 2

On a préparé les différents composés H_{y}A_{1-y}V₃O₈.nH₂O (0,00≤y≤0,5; A=Na, Li, K; 0≤n≤2,8) par oxydation électrochimique du précurseur V₃O₇.H₂O.

Le précurseur V₃O₇.H₂O a été utilisé comme matière active (MA) d'une électrode composite comprenant en outre du noir de carbone (NC) et comme liant (L) un poly(fluorure de vinylidène dans des proportions massiques dans la gamme de MA = 50-85, NC = 10-35, L = 5-15. L'électrolyte était une solution aqueuse de AGlO₄ à 0,1 mol.l⁻¹ (A=Na, Li, K) dont le pH était maintenu entre 5 et 6. L'électrode de référence était une électrode au calomel saturée (ECS). L'oxydation a été réalisée en voltamétrie cyclique par balayage du potentiel de la valeur initiale (0,2-0,4 V vs. ECS) jusqu'à 0,8-0,9 V avec une vitesse de 1 à 30 mV/h.

### Exemple 3

### Détermination des formules chimiques des composés

Les concentrations en métal alcalin et en vanadium des différents composés obtenus selon l'exemple 1 ont été déterminées par une analyse chimique élémentaire par spectroscopie d'absorption atomique en plasma inductif couplé. L'incertitude sur les résultats est de l'ordre de 1%. Le dosage du degré d'oxygène actif (degré d'oxydation du vanadium) a été réalisé par un dosage rédox en retour (consistant à effectuer une réduction par un excès de sel de Mohr FeSO₄, puis une réoxydation par une solution de KMnO₄ à 50°C). Les composés obtenus contiennent le vanadium uniquement sous la forme V^{v}. Pour les composés au lithium et au potassium, les résultats obtenus sont toujours les mêmes (dans la limite de l'incertitude), quelles que soient les conditions de préparation et la méthode utilisée. Dans le cas du sodium, deux compositions différentes ont été obtenues, suivant le pH de la solution oxydante. A pH 5,5, y est 0,1. A pH 6,5, y est 0,04, mais la réaction s'accompagne d'une forte dissolution. La réaction d'oxydation de V₃O₇.H₂O est topotactique et la nature des couches "V₃O₈" est donc préservée. De ce fait, les résultats obtenus et la neutralité électrique imposent la présence de protons résiduels.

L'étude thermogravimétrique des composés préparés montre que l'eau qui est présente dans l'espace inter-couches est éliminée par chauffage à 100°C sous vide primaire pendant 1h.

Les résultats concernant les produits obtenus par voie chimique selon l'exemple 1 sont rassemblés dans le tableau 1 ci-dessous.

**Tableau 1**

| | Rapport atomique M⁺9*V* | Teneur en V^{IV} | Formule |
|---|---|---|---|
| Composé de Na | 0,30 | 0 | Na_{0.9}H_{0.1}V₃O₈.1,7H₂O |
| | 0,32 | | Na_{0.96}H_{0.04}V₃O₈. 1,7H₂O |
| Composé de Li | 0,20 | 0 | Li_{0.6}H_{0.4}V₃O₈.2,8H₂O |
| Composé de K | 0,20 | 0 | K_{0.5}H_{0.4}V₃O_{8.}1H₂O |

### Exemple 4

### Caractéristiques structurales des oxydes H_{y}Na_{1-y}V₃O₈.nH₂O (I)

Le diagramme de diffraction X de poudre a été enregistré à l'aide d'un diffractomètre D5000 muni d'un détecteur Kevex, dans le domaine 6° ≤ 2θ ≤ 120°, avec un pas de 0,03° et 39 secondes de comptage par pas.

Après détermination précise des paramètres de maille, on a effectué les affinements du profil du diagramme X.

Les extinctions systématiques observées dans le diagramme X sont compatibles avec les groupes spatiaux Pnma et Pn2₁a ; les affinements ont été effectués avec le groupe. Pnma qui est compatible avec le modèle structural retenu.

Des affinements par méthode de Rietveld ont alors été effectués en n'introduisant que les atomes V et 0 des couches (formule V₃O₈). Le calcul de fonctions de Fourier et Fourier différence a alors fourni des informations sur les positions des espèces situées entre les couches (Na et H₂O).

Les essais effectués confirment que les divers échantillons du composé H_{y}Na_{1-y}V₃O₈.nH₂O obtenus selon les exemples 1 et 2 cristallisent dans le groupe d'espace Pnma.

Les paramètres cristallins des phases Na_{0,9}H_{0,1}V₃O₈.nH₂O hydratées et déshydratées sont donnés au tableau 2, ainsi que ceux du précurseur. Le composé déshydraté Na_{0,9}H_{0,1}V₃O₈ a été obtenu par traitement thermique sous vide à 100°C pendant 1 heure du composé hydraté Na_{0,9}H_{0,1}V₃O₈.1,7H₂O.

**Tableau 2**

| Paramètres | a (Å) | b (Å) | c (Å) | V (Å³) |
|---|---|---|---|---|
| V₃O₇.H₂O | 16,9298(2) | 9,3589(1) | 3,64432(4) | 577,4 |
| Na_{0.9}H_{0.1}V₃O₈,1,7H₂O | 22,062(3) | 9,362(1) | 3,6078(6) | 745,2(3) |
| Na_{0.9}H_{0.1}V₃O₈ | 18,593(8) | 9,431(4) | 3,6081(7) | 632,7(6) |

Les positions atomiques caractérisant la structure de l'oxyde de sodium avant déshydratation sont rassemblées dans le tableau 3. x, y et z désignent les coordonnées des atomes dans la maille élémentaire, OX désigne un atome d'oxygène appartenant à une molécule d'eau, τ est le taux d'occupation et Uᵢₛₒ est le facteur d'agitation thermique.

**Tableau 3**

| Atome | x | y | z | τ | Uᵢₛₒ (Å²) |
|---|---|---|---|---|---|
| V(1) | 0,1196(4) | 0,25 | 0,0394(2) | 1 | 0,002(1) |
| V(2) | 0,0461(4) | 0,25 | 0,8734(2) | 1 | 0,013(1) |
| V(3) | 0,0964(5) | 0,75 | 0,4579(2) | 1 | 0,033(2) |
| O(1) | 0,9269(15) | 0,25 | 0,9614(5) | 1 | 0.011(1) |
| O(2) | 0,276(1) | 0,25 | 0,0841(5) | 1 | 0,011 |
| O(3) | 0,978(1) | 0,25 | 0,1054(4) | 1 | 0,011 |
| O(4) | 0,213(1) | 0,25 | 0,9442(5) | 1 | 0,011 |
| O(5) | 0,166(1) | 0,25 | 0,8278(5) | 1 | 0,011 |
| O(6) | 0,889(1) | 0,25 | 0.8404(5) | 1 | 0.011 |
| O(7) | 0,925(1) | 0,75 | 0,5177(4) | 1 | 0,011 |
| O(8) | 0,037(1) | 0,75 | 0,3869(4) | 1 | 0,011 |
| Na(1 ) | 0.651(3) | 0,25 | 0,834(1) | 0,31 | 0,020(9) |
| Na(2) | 0,423(3) | 0,25 | 0,790(1) | 0,35 | 0,005(6) |
| Na(3) | 0,713(7) | 0,75 | 0,827(3) | 0.18 | 0,03(2) |
| Na(4) | 0,39(1) | 0,75 | 0,811(4) | 0,18 | 0,00(2) |
| Na(5) | 0,416(7) | 0,75 | 0,806(2) | 0,27 | 0,05(2) |
| OW(1) | 0.650(4) | 0,75 | 0,807(2) | 0,42 | 0,05(1) |
| OW(2) | 0.363(6) | 0,75 | 0,755(2) | 0,22 | 0,01(2) |

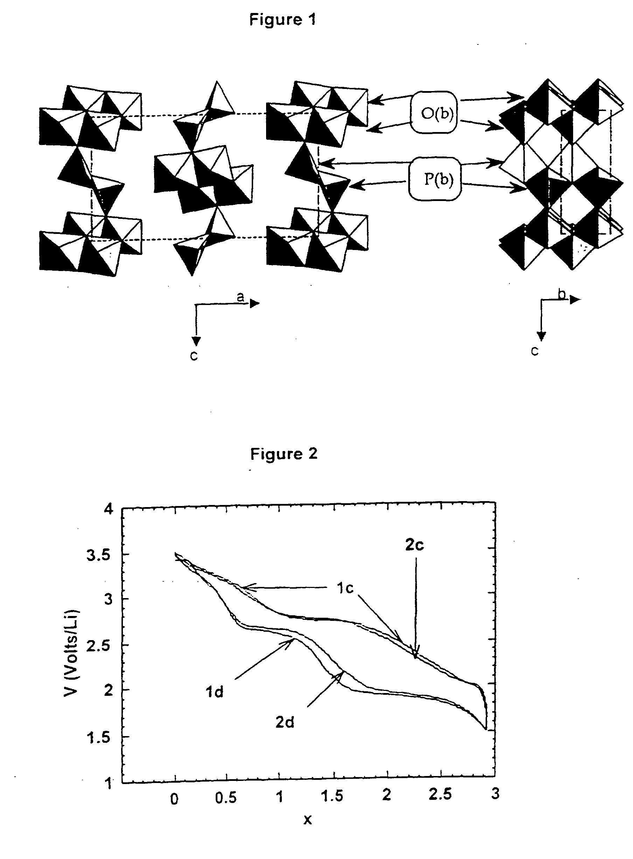

La structure est constituée du même type de couches "V₃O₈" que le précurseur V₃O₇.H₂O, c'est-à-dire avec le même arrangement relatif des différents polyèdres VO₅ et VO₆. Mais ces couches sont empilées différemment : par rapport à H₂V₃O₈, une couche sur deux est décalée de b/2 (b désignant l'axe cristallographique de coordonnées (010)]. Cette structure est représentée sur la figure 1, sur laquelle O(b) signifie "chaines d'octaèdres selon b" et P(b) signifie "chaînes de pyramides à base carrée selon b".

### Exemple 6

### Mesure de la capacité réversible maximale, de la rétention de capacité en cyclage à différents régimes (temps de décharge ou charge) et du comportement en puissance.

Les propriétés d'intercalation des oxydes (I) déshydratés de l'invention ont été évaluées selon le procédé décrit par J.M. Tarascon (J. Electrochem. Soc., 132, 1985, 2089) en cellule Swagelok assemblée en boîte sèche. Pour comparaison, on a évalué les propriétés des oxydes de lithium et de potassium préparés à titre comparatif dans les exemples 1 et 2, ainsi que celles de l'oxyde ω-Li₃V₂O₅ de l'art antérieur.

L'électrode positive a été préparée en déposant une pâte, constituée d'un mélange de l'oxyde à évaluer broyé (85% en masse), de noir de carbone Super P, Chemmetals Inc., Baltimore, MD (10% en masse) et d'un liant (fluorure de polyvinylidène) (5% en masse) dans la cyclopentanone, sur un disque d'aluminium de 1 cm² servant de collecteur de courant. Le dépôt (5 mg environ) a été séché à l'air, puis à 100°C sous vide. Comme électrode négative, servant d'électrode de référence, on a utilisé un disque de lithium métallique ayant 1 cm² de surface et 0,75 mm d'épaisseur, déposé sur un collecteur de courant qui est un disque de 1 cm² de nickel. Les deux électrodes étaient séparées par un disque de fibre de verre imprégné par un électrolyte consistant en une solution 1 mole.l⁻¹ d'hexafluorure de lithium dans un mélange carbonate d'éthylène/carbonate de diméthyle dans le rapport massique 2/1. La batterie est constituée de deux pistons collecteurs de courant pressant le "sandwich" formé par les deux électrodes encadrant le séparateur. Le lithium sert à la fois de contre-électrode et d'électrode de référence. Une feuille de Mylar permet d'isoler électriquement le bâti des autres pièces. Des joints assurent l'étanchéité du système.

Les expériences ont été réalisées à température ambiante (22°C) en mode galvanostatique, au moyen du système Mac-Pile (Biologic Claix, France), dans les domaines de potentiel 3,5-1,5 V/Li ou 4-1,5 V/Li. Pour chaque composé, plusieurs expériences ont été réalisées en utilisant des valeurs différentes de la densité de courant. Les densités de courant utilisées en décharge étaient comprises entre 10 et 300 µA.cm⁻², ce qui correspond à des durées totales de décharge variant entre 50 et 2 heures, c'est-à-dire à des régimes compris entre C/50 et C/2. Pour les expériences réalisées aux régimes entre C/10 et C/50, les mêmes densités de courant ont été utilisées en charge et en décharge. En revanche, pour les régimes de décharge plus rapides (décharge en C/5 et C/2), la densité de courant utilisée pendant la charge était de 40 µA.cm⁻², ce qui correspond à une durée totale de la charge de 10 h.

La réponse des matériaux en puissance a été testée en imposant à la batterie un courant correspondant à un régime théorique de 2C (décharge totale effectuée en 0,5 h si la capacité restait à sa valeur maximale). Après une relaxation (qui est prolongée jusqu'à ce que les variations de potentiel soient inférieures à 5 mV.h⁻¹), la décharge a été poursuivie en divisant la valeur du courant par 2. Après une autre relaxation, le courant a encore été divisé par 2, et ainsi de suite jusqu'à l'imposition d'un courant correspondant à une durée totale de décharge de 64 h.

Le comportement type de l'oxyde (I) de l'invention sous sa forme anhydre NaV₃O₈, a été étudié lors d'une décharge en 50 h. La Figure 2 représente les variations du potentiel avec le taux de lithium intercalé par groupement formulaire, enregistrées pendant les deux premiers cycles de NaV₃O₈ obtenu dans l'exemple 1 à un régime de C/50. Le potentiel V est indiqué en ordonnée. La teneur x en lithium de l'oxyde LiₓNaV₃O₈ est indiquée en abscisse. (1c) et (2c) représentent respectivement la première et la seconde charge. (1d) et (2d) représentent respectivement la première et la seconde décharge. Il apparaît ainsi que, dans le domaine de potentiel 3,5-1,5 V/Li, il est possible d'intercaler dans le matériau 2,9 Li pour 3 atomes de vanadium, ce qui correspond à une capacité spécifique de 260 mAh.g⁻¹. Dans ces conditions, le potentiel moyen d'intercalation est de 2,35 V/Li.

Le comportement de V₃O-.H₂O a été testé dans des conditions similaires. Il n'a été possible d'intercaler que 2,2 Li par groupement formulaire (ce qui correspond à une capacité spécifique de 210 mAh.g⁻¹) à un potentiel moyen de 2,5 V. Le composé NaV₃O₈ (I) présente donc une meilleure capacité que le précurseur H₂V₃O₈. De plus, l'intercalation du lithium dans NaV₃O₈ est parfaitement réversible.

Les résultats obtenus pour l'oxyde (I) de l'invention ont également été comparés à ceux obtenus à partir d'un V₂O₅ commercial (Merck référence 1 08503 0250). Lors de la première décharge jusqu'à 1,5 V/Li, ce composé se transforme en ω-Li₃V₂O₅. Ce dernier désintercale 1,6 Li par groupement formulaire en 50 h dans le domaine de potentiel 3,5-1,5 V/Li, ce qui correspond à une capacité spécifique de 240 mA.g⁻¹ à un potentiel moyen de 2,4 V.

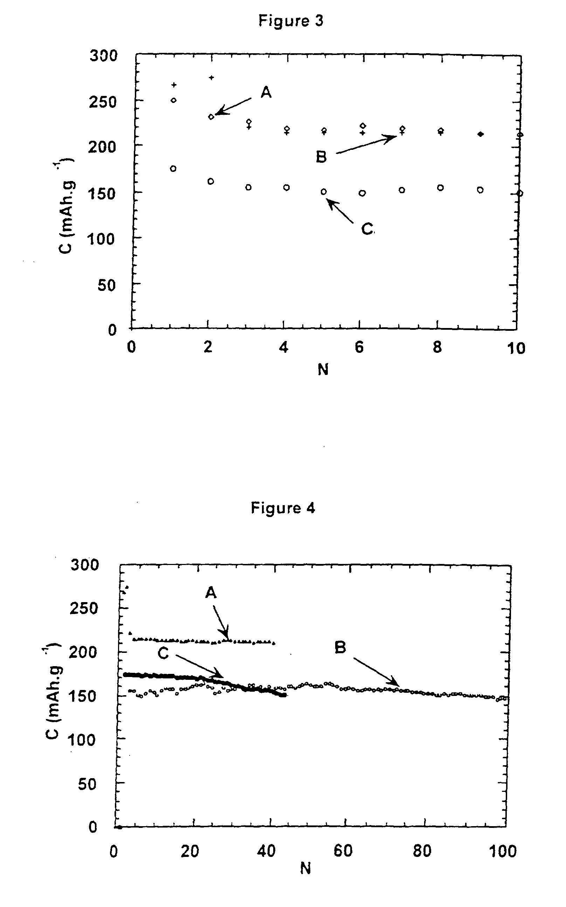

Les performances de NaV₃O₈ ont également été testées à différentes vitesses de cyclage, correspondant mieux à des conditions d'utilisation réelles. La figure 3 représente les variations de la capacité spécifique au cours du cyclage de NaV₃O₈, à un régime de C/20 en décharge et C/20 en charge dans le domaine 3,5-1,5 V (courbe A), à un régime de C/10 en décharge et C/10 en charge dans le domaine 4-1,5 V, les deux premiers cycles étant à C/90 (courbe B) et à un régime de C/2 en décharge et C/10 en charge dans le domaine 3,5-1,5 V (courbe C). La capacité C est indiquée en ordonnées, et le nombre N de cycles en abscisse. Il apparaît ainsi que la capacité spécifique diminue quand le cyclage est plus rapide. Il faut noter que la capacité obtenue à C/10 est proche de celle obtenue à C/20 du fait du domaine de potentiel de cyclage plus large. Toutefois, à C/2, la capacité spécifique initiale est encore de 175 mAh.g⁻¹.

Les comportements en cyclage de NaV₃O₈ et de ω-Li₃V₂O₅ aux régimes de C/10 et C/2 ont été comparés. Sur la Figure 4, la courbe A représente les variations de la capacité spécifique de NaV₃O₈ au cours du cyclage à un régime de C/10, les 2 premiers cycles étant à C/90, le domaine étant 4-1,5 V. La courbe B représente les variations de la capacité spécifique de KaV₃O₈ au cours du cyclage à un régime de C/2 dans le domaine 3,5-1,5 V. La courbe C les variations, de la capacité spécifique de ω-Li₃V₂O₅ au cours du cyclage à un régime de C 2 dans le domaine 3,5-1,5 V. La capacité C, en mAh.g, est indiquée en ordonnée et le nombre N de cycles en abscisse. Pour l'oxyde de l'invention NaV₃O₈, la tenue en cyclage est excellente, avec une perte en capacité inférieure à 5% au 100ème cycle à C/2 et inférieure à 2% au 40ème cycle à C/10. La capacité de départ est un peu plus élevée pour le produit commercial V₂O₅ que pour NaV₃O₈. Toutefois, ce V₂O₅ présente une chute de capacité très régulière: dès le 40ème cycle, la perte de capacité est de 10% et la capacité devient inférieure à celle observée pour NaV₃O₈.

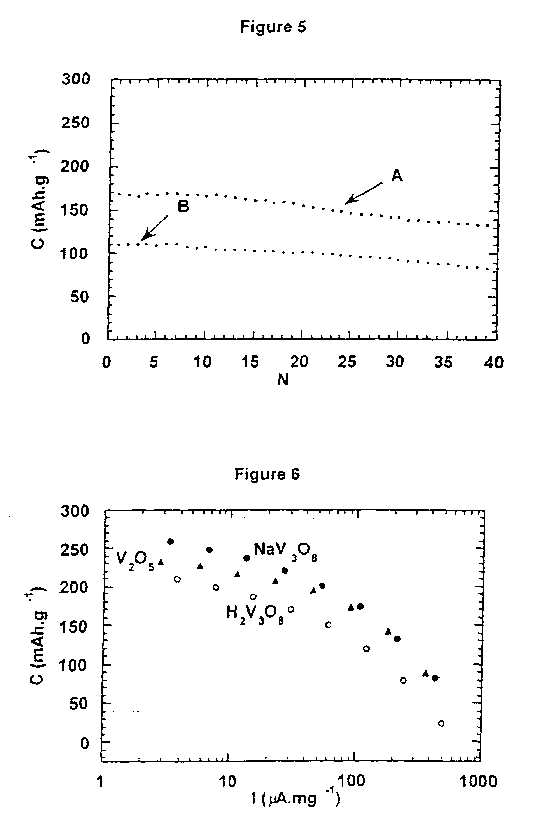

Le comportement en cyclage des composés K_{0,6}H_{0,4}V₃O₈ et Li_{0,6}H_{0,4}V₃O₈ a également été étudié et comparé à celui de l'oxyde de sodium de l'invention. Les résultats obtenus dans le domaine de cyclage 4-1,5 V sont résumés sur la figure 5. La figure 5 représente les variations de la capacité spécifique au cours du cyclage de K_{0,6}H_{0,4}V₃O₈ (courbe A) et de Li_{0,6}H_{0,4}V₃O₈ (courbe B) à un régime de C/15. Le composé au potassium présente une capacité initiale (en C/15) de 170 mAh.g⁻¹, à comparer à plus de 220mAh.g⁻¹ pour le composé au Na (220mAh.g⁻¹ à C/10). La tenue en cyclage à ce régime est médiocre (23% de perte en 40 cycles). Le composé au lithium présente une très faible capacité initiale (en C/15), de 110 mAh.g⁻¹, et une mauvaise tenue en cyclage (27% de perte en 40 cycles).

Les performances en puissance des trois composés NaV₃O₈, H₂V₃O₈ et V₂O₅ commercial ont été comparées. La figure 6 représente la variation de la capacité C (exprimée en mAh.g) en fonction de la densité de courant I (exprimée en µA.mg⁻¹) pour différents régimes. La comparaison des courbes obtenues pour NaV₃O₈ et H₂V₃O₈ confirme que NaV₃O₈ est plus performant que le orécurseur dont il est issu, quelles que soient les conditions d'utilisation. La figure 6 confirme également la supériorité des performances de NaV₃O₈ par rapport à V₂O₅ commercial pour des courants de décharge plus faibles que 100µA.mg⁻¹, soit des régimes plus lents que C/1,5. Pour les régimes plus rapides, les capacités obtenues avec les deux matériaux sont comparables, avec des valeurs légèrement supérieures pour le composé commercial. Toutefois, l'excellente tenue en cyclage de NaV₃O₈ compense largement cet inconvénient.

Le tableau 4 résume l'ensemble des résultats obtenus lors des diverses mesures effectuées. Dans ce tableau, C représente la capacité, exprimée en (mAh.g⁻¹), PC représente la perte de capacité en cyclage, exprimé en % au cycle N, PC50/2 représente la diminution de capacité (en %) lors du passage d'un régime C/50 à C/1,5. Le comportement en puissance est d'autant meilleur que cette diminution de capacité est faible. Les valeurs repérées par une astérisque ont été déterminées à partir des résultats obtenus lors de l'étude de la réponse en puissance des matériaux. Les régimes de cyclage C/n indiqués correspondent aux valeurs réelles mesurées et non pas aux valeurs théoriques imposées. Les chiffres entre parenthèses indiquent le régime de fonctionnement, à savoir (1) est un régime C/2 et 3,5-1,5 V ; (2) est un régime C/10 et 4-1,5 V ; (3) est un régime C/15 et 4-1,5 V.

**Tableau 4**

| Composé | C à C/50 | C à C/20 | C à C/15 | C à C/10 | C à C/2 | PC | PC50/2 |
|---|---|---|---|---|---|---|---|
| NaV₃O₈ | 260 | 250 | | 220 | 175 | 0 au cycle 40 (1) | 33 |
| | | | | | | <5 au cycle 100 (1) | |
| | | | | | | 2 au cycle 40 (2) | |
| H₂V₃O₈ | 210 | 230* | | 210* | 120* | 5 au cycle 50 (3) | 43 |
| ω-Li₃V₂O₅ | 240 | 200* | | 180* | 175* | 10 au cycle 40 (1) | 27 |
| KV₃O₈ | | | 170 | | | 23 au cycle 40 (3) | |
| LiV₃O₈ | | | 110 | | | 27 au cycle 40 (3) | |

## Revendications

1. Oxyde répondant à la formule H_{y}Na_{1-y}V₃O₈.nH₂O (I) **caractérisé en ce que** :
- 0 ≤ n ≤ 1,70 et 0 ≤ y ≤ 0,5
- il cristallise dans le groupe d'espace Pnma ;
- les paramètres de maille après déshydratation par traitement thermique sont comme suit : a = 18,593(8)(Å), b = 9,431(4) (Å), c = 3,6081(7) (Å), V = 632,7(6) (Å³).

2. Oxyde selon la revendication 1, **caractérisé en ce que** 0 ≤ y ≤ 0, 2.

3. Procédé de préparation d'un oxyde selon la revendication 1, **caractérisé en ce qu'**il consiste à effectuer une oxydation du précurseur solide V₃O₇.H₂O.

4. Procédé selon la revendication 3, **caractérisé en ce que** l'oxydation du précurseur V₃O₇.H₂O est une oxydation chimique par une solution aqueuse de NaClO à un pH compris entre 4 et 13, à une température comprise entre 5 et 70°C.

5. Procédé selon la revendication 3, **caractérisé en ce que** l'oxydation du précurseur V₃O₇.H₂O est effectuée par voie électrochimique.

6. Utilisation d'un oxyde selon la revendication 1 comme matière active d'une électrode positive.

7. Electrode composite comprenant un liant, un composé conférant des propriétés de conduction électronique et une matière active, **caractérisée en ce que** la matière active est un oxyde H_{y}Na_{1-y}V₃O₈.nH₂O (I) selon la revendication 1.

8. Electrode selon la revendication 7, **caractérisée en ce que** le liant est un liant organique non électroactif, constitué par un polymère non solvatant et éventuellement un composé polaire aprotique.

9. Electrode selon la revendication 7, **caractérisée en ce que** le composé conférant des propriétés de conduction électronique est un noir de carbone.

10. Batterie rechargeable comprenant une électrode positive et une électrode négative séparées par un électrolyte, **caractérisée en ce que** l'électrode positive est une électrode selon la revendication 7.

11. Batterie selon la revendication 10, **caractérisée en ce que** l'électrode négative est constituée par du lithium métallique.

12. Batterie selon la revendication 10, **caractérisée en ce que** l'électrode négative est une électrode composite comprenant un liant et un matériau capable d'insérer de manière réversible des ions lithium à bas potentiel rédox.

## Patentansprüche

1. Oxid der Formel H_{y}Na_{1-y}V₃O₈.nH₂O (I), **dadurch gekennzeichnet, dass**:
- gilt: 0 ≤ n ≤ 1,70 und 0 ≤ y ≤ 0,5;
- es in der Raumgruppe Pnma kristallisiert;
- die Gitterparameter nach Dehydratisierung durch Wärmebehandlung wie folgt sind: a = 18,593 (8) (Å), b = 9,431 (4) (Å), c = 3,6081 (7) (Å), V = 632,7 (6) (Å³).

2. Oxid nach Anspruch 1, **dadurch gekennzeichnet, dass** gilt: 0 ≤ y ≤ 0,2.

3. Verfahren zur Herstellung eines Oxids nach Anspruch 1, **dadurch gekennzeichnet, dass** es darin besteht, eine Oxidation eines festen Vorläufers V₃O₇.H₂O durchzuführen.

4. Verfahren nach Anspruch 3, **dadurch gekennzeichnet, dass** die Oxidation des Vorläufers V₃O₇.H₂O eine chemische Oxidation mittels einer wässrigen Lösung von NaClO bei einem pH zwischen 4 und 13 und einer Temperatur zwischen 5 und 70 °C ist.

5. Verfahren nach Anspruch 3, **dadurch gekennzeichnet, dass** die Oxidation des Vorläufers V₃O₇.H₂O auf elektrochemischem Weg erfolgt.

6. Verwendung eines Oxids nach Anspruch 1 als aktives Material einer positiven Elektrode.

7. Verbundelektrode, umfassend ein Bindemittel, eine Verbindung, die elektrische Leitfähigkeit verleiht, und ein aktives Material, **dadurch gekennzeichnet, dass** das aktive Material ein Oxid H_{y}Na_{1-y}V₃O₈.nH₂O (I) nach Anspruch 1 ist.

8. Elektrode nach Anspruch 7, **dadurch gekennzeichnet, dass** das Bindemittel ein organisches, elektrisch inaktives Bindemittel, bestehend aus einem nicht solvatisierenden Polymer und gegebenenfalls einer polaren, aprotischen Verbindung, ist.

9. Elektrode nach Anspruch 7, **dadurch gekennzeichnet, dass** die Verbindung die elektrische Leitfähigkeit verleiht ein Ruß ist.

10. Wiederaufladbare Batterie, umfassend eine positive Elektrode und eine negative Elektrode, die durch einen Elektrolyten getrennt sind, **dadurch gekennzeichnet, dass** die positive Elektrode eine Elektrode nach Anspruch 7 ist.

11. Batterie nach Anspruch 10, **dadurch gekennzeichnet, dass** die negative Elektrode aus metallischem Lithium besteht.

12. Batterie nach Anspruch 10, **dadurch gekennzeichnet, dass** die negative Elektrode eine Verbundlektrode ist, die ein Bindemittel und ein Material umfasst, das in der Lage ist, Lithiumionen mit niedrigem Redoxpotential reversibel einzuführen.

## Claims

1. Oxide satisfying the formula H_{y}Na_{1-y}V₃O₈·nH₂O (I), **characterized in that**
- 0 ≤ n ≤ 1.70 and 0 ≤ y ≤ 0.5;
- it crystallizes in the Pnma space group; and
- the lattice parameters after dehydration by heat treatment are as follows: a = 18.593(8) (Å), b = 9.431(4) (Å), c = 3.6081(7) (Å), V = 632.7(6) (Å³).

2. Oxide according to Claim 1, **characterized in that** 0 ≤ y ≤ 0.2.

3. Method of preparing an oxide according to Claim 1, **characterized in that** it consists in carrying out an oxidation of the solid precursor V₃O₇·H₂O.

4. Method according to Claim 3, **characterized in that** the oxidation of the precursor V₃O₇·H₂O is a chemical oxidation by an aqueous NaClO solution with a pH of between 4 and 13, at a temperature between 5 and 70°C.

5. Method according to Claim 3, **characterized in that** the oxidation of the precursor V₃O₇·H₂O is carried out electrochemically.

6. Use of an oxide according to Claim 1 as active material of a positive electrode.

7. Composite electrode comprising a binder, a compound conferring electronic conduction properties and an active material, the said electrode being **characterized in that** the active material is an oxide H_{y}Na_{1-y}V₃O₈·nH₂O (I) according to Claim 1.

8. Electrode according to Claim 7, **characterized in that** the binder is a non-electroactive organic binder consisting of a non-solvating polymer and optionally an aprotic polar compound.

9. Electrode according to Claim 7, **characterized in that** the compound giving electronic conduction properties is a carbon black.

10. Rechargeable battery comprising a positive electrode and a negative electrode that are separated by an electrolyte, **characterized in that** the positive electrode is an electrode according to Claim 7.

11. Battery according to Claim 10, **characterized in that** the negative electrode consists of lithium metal.

12. Battery according to Claim 10, **characterized in that** the negative electrode is a composite electrode comprising a binder and a material capable of reversibly inserting lithium ions at low redox potential.
